# NEW EUROPEAN PATENT SPECIFICATION

(11) **EP 1 293 692 B2**
(45) Date of publication and mention of the opposition decision: **02.09.2009**
(45) Mention of the grant of the patent: 08.06.2005
(21) Application number: 02020404.6
(22) Date of filing: 10.09.2002
(51) Int. Cl.: F16D 3/84

(54) **Joint boot made of resin**
Dichtungsmanschette hergestellt aus Kunstharz
Soufflet d'étanchéité fabriqué en résine

(30) Priority: 12.09.2001 JP 2001277187
(43) Date of publication of application: 19.03.2003
(73) Proprietor: TOYO TIRE & RUBBER CO., LTD ., Osaka 550-0002 (JP)
(72) Inventor: Imazu, Eiichi, Nishiku, Osaka 550-0002 (JP); Ohno, Hiroshi, Nishiku, Osaka 550-0002 (JP)
(74) Representative: Strehl Schübel-Hopf & Partner

(56) References cited:
- EP-A- 0 394 569
- EP-B1- 0 464 984
- DE-A- 1 266 591
- DE-A- 3 324 997
- DE-A1- 4 330 182
- DE-U1- 7 901 448
- JP-A- 06 185 534
- JP-U- 55 -41 656
- US- - 4 540 384
- US- - 4 902 545
- US- - 5 702 669
- US- - 5 725 433
- US-A- 4 540 384
- US-B1- 6 193 419

## Description

This invention relates to a combination of a joint boot made of a resin and a housing part of a joint according to the preamble of claim 1, and more particularly, to a bellows like joint boot made of resin used for automotive constant velocity joints, etc.

A joint of a drive shaft for motor vehicles or industrial machinery is equipped with a joint boot in order to retain a grease encapsulated in it or to preclude the intrusion of dust into it.

EP 0 464 984 B1 which shares with the present invention the features of the preamble of Claim 1, discloses a joint boot for operation at high angular offsets of the ends.

DE-A-3 324 997 discloses a joint boot made of resin with two generally cylindric ends of different diameters, wherein the bellows part comprises various mounting portions of different diameters so that the joint boot can be cut to fit to joints of different sizes. EP-A-0 394 569 discloses another joint boot related to the one used in the present invention.

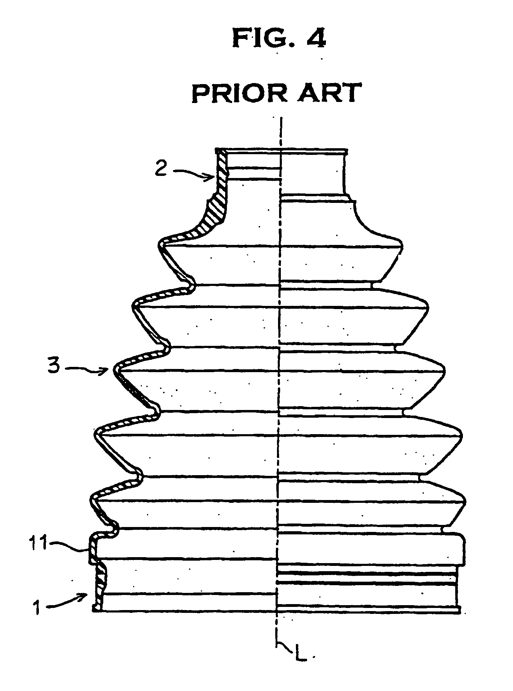

One example of a conventional joint boot is shown in Fig. 4. This boot comprises a large-diameter cylinder part 1 to be fitted in a housing of a constant velocity joint, a small-diameter cylinder part 2 disposed coaxially so to be spaced apart from the large-diameter cylinder part 1 and adapted to be fitted to a shaft, and a bellows part 3 linking integrally both parts, and is molded as a one-piece body by injection molding, press blow molding, or the like. In this case, a shoulder portion 11 of the large-diameter cylinder part 1 joining to the bellows part 3 is contoured to be parallel to a center line L of the boot, and consequently, the shoulder portion 11 assumes a simple short cylinder form.

When the conventional boot is rotated particularly in the condition that the boot is subjected to bending deformation in a wide angle, however, its durability in terms of bending fatigue resistance, wear resistance, etc. can be not sufficient. Accordingly, a further improvement in durability is required.

In the light of this problem, this invention has been made and it is a primary object of this invention to provide a joint boot made of resin, whose durability is remarkably enhanced.

The present inventors have found that in cases where the contour of the shoulder portion of the large-diameter cylinder part is parallel to the center line of the boot as is the case with the prior art boot, when the boot is deformed to bend in a wide angle, the shoulder portion has been deformed on the inward bend side in an overhanging manner, as a result of which a crack due to bending fatigue is produced at a foot part of the shoulder portion, otherwise the bellows part is folded one upon another undesirably due to the overhanging deformation of the shoulder portion, which further can lead to the occurrence of cracking at trough portions of the bellows part. We have further found out that the overhanging deformation of the shoulder portion can be suppressed by slanting the contour of the shoulder portion of the large-diameter cylinder part toward the small-diameter cylinder part in a taper form, thereby enhancing the durability. On the basis of these findings, the present invention has been accomplished.

The invention solves the above problem by the combination defined in claim 1.

That is, according to this invention, a joint boot made of resin comprises a large-diameter cylinder part extending at its one end and a small-diameter cylinder part coaxial with the large-diameter cylinder part extending at its other end, and a bellows part linking integrally the both parts through it, wherein a shoulder portion of the large-diameter cylinder part joining to the bellows part is contoured to slant toward the other distal end side in a taper form. Stated another way, the shoulder portion slants so that its diameter may be gradually smaller as the shoulder portion is nearer to the other end side.

In the joint boot made of resin according to this invention, it is preferred that a slant angle of the contour of the shoulder portion to the center line of the boot be 6 degrees and upward. Further the bellows part is comprised of a plurality of trough portions and crest portions extending alternately contiguously including a first trough portion, a first crest portion, a second trough portion and a second crest portion in this order from the large-diameter cylinder part side. Here it is preferred that the crest portions be gradually smaller in diameter from the large-diameter cylinder part to the small-diameter cylinder part and the outside diameter of the first crest portion be set larger than the outside diameter of the large-diameter cylinder part. Thereby stresses on the trough portions in the vicinity of the large-diameter cylinder part, particularly on the second trough portion can be diminished and consequently, it is possible to enhance the durability.
Fig. 1 is a half side elevational, half sectional view of a joint boot made of resin used in the combination pertaining to one example of this invention;
Fig. 2 is a sectional view of the joint boot in Fig. 1 showing the state that it is mounted on a constant velocity joint;
Fig. 3 is an enlarged sectional view showing a main part of a large-diameter cylinder part of the joint boot in Fig. 1;
Fig. 4 is a half side elevational, half cross-sectional view of a conventional joint boot of resin;
Fig. 5A and Fig.5B are a sectional view of a main part of this Example when deformed in a wide angle and a sectional view of a main part of Comparative Example likewise when deformed in a wide angle, respectively;
Fig. 6 is an illustration of a simulation by FEM (Finite Element Method) analysis of a joint boot, wherein a taper angle (α) of a shoulder portion is 0 degree;
Fig. 7 is an illustration of a simulation by FEM analysis of a joint boot, wherein a taper angle (α) of its shoulder portion is 5 degrees;
Fig. 8 is an illustration of a simulation by FEM analysis of a joint boot, wherein a taper angle (α) of its shoulder portion is 6 degrees;
Fig. 9 is an illustration of a simulation by FEM analysis of a joint boot, wherein a taper angle (α) of its shoulder portion is 8 degrees;
Fig. 10 is an illustration of a simulation by FEM analysis of a joint boot, wherein a taper angle (α) of its shoulder portion is 10 degrees;
Fig. 11 is an illustration of a simulation by FEM analysis of a joint boot, wherein a taper angle (α) of its shoulder portion is 15 degrees;
Fig. 12A, Fig. 12B and Fig. 12C are graphical representations of FEM analysis results of the Example and Comparative Example, Fig. 12A being a θ-σ diagram of joint angle (θ) versus stress (σ), Fig. 12B being a θ-P1 diagram of joint angle (θ) vs. contact pressure of inter-bellows part (P1), Fig. 12C being a θ-P2 diagram of joint angle (θ) vs. contact pressure (P2) of a shaft and a bellows part.

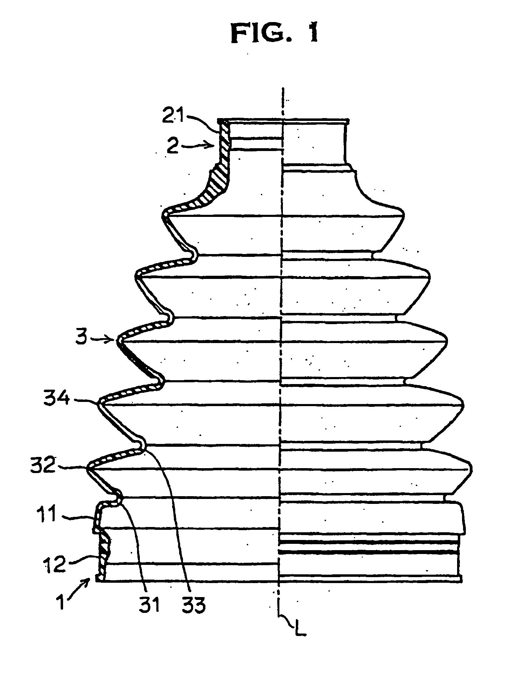

Referring to Figs. 1 to 3, there is shown a joint boot made of a thermoplastic resin to be mounted on a constant velocity joint of automobiles. This boot comprises a large-diameter cylinder part 1, a small-diameter cylinder part 2 disposed coaxially with the large-diameter cylinder part 1 so as to be spaced apart from it, and a bellows part 3 linking contiguously both parts 1, 2 in a one-piece body.

The large-diameter cylinder part 1 assumes a short cylindrical form and is adapted to be fitted and secured externally to an outer peripheral face of a housing part 4 of a constant velocity joint by means of a fastening clamp 5. The large-diameter cylinder part 1 comprises a mounting portion 12 and a shoulder portion 11. The mounting portion has a groove 13 for receiving thereon the fastening clamp 5, on its outer periphery side, and a projection 14 for sealing on its inner periphery side. The shoulder portion 11 is located axially inwardly of the mounting portion 12, and interconnects the mounting portion 12 and the bellows part 3.

The small-diameter cylinder part 2 is adapted to be fitted and secured onto an outer peripheral face of a shaft 6 by means of a fastening clam 7 and assumes a short cylinder form. Further, the small-diameter cylinder part 2 is disposed coaxially with the large-diameter cylinder part 1, namely so as to have a common center line L. Also in the small-diameter cylinder part 2, a groove for receiving the fastening clamp 7 is defined on its outer periphery side and a projection for sealing is provided on its inner periphery side.

The bellows part 3 is of a generally cylindrical body in cross-section having an aperture difference between both ends and provides internally a grease sealing space 8. The bellows part 3 is comprised of a first trough portion 31, a first crest portion 32, a second trough portion 33, a second crest portion 34, and so forth in this order from the large-diameter cylinder part 1 side. Thus the bellows part 3 comprises a plurality of trough and crest portions alternately extending contiguously. The trough portions and crest portions are set to be progressively smaller in diameter from the large-diameter cylinder part to the small-diameter cylinder part. Of slope faces constituting the bellows part 3, ones that are not directly contiguous with the large-diameter cylinder part 1 and the small-diameter cylinder part 2, namely, slope faces other than ones at both ends of the bellows part are configured in a convex curved form outwardly of the boot, in a cross-sectional form in the axial direction of the boot.

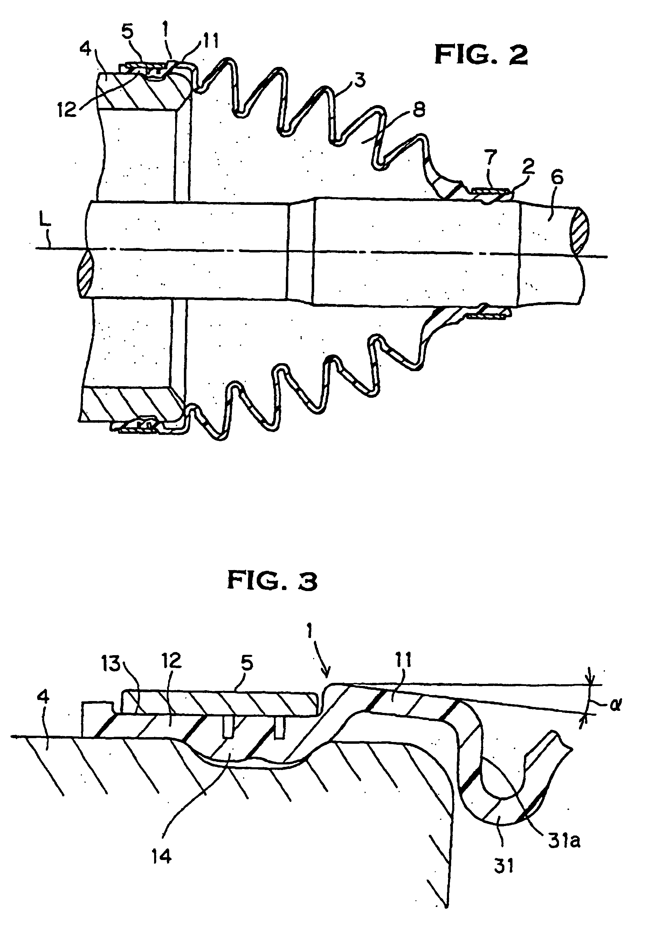

In the fundamental construction of the joint boot as described above, in this example as shown in Fig. 3, the contour of the shoulder portion 11 contiguous to the bellows part 3 is formed to slant toward the small-diameter cylinder part 2 side in a taper fashion. That is, the contour of the shoulder portion 11 of the large-diameter cylinder part 1 is inclined relative to the boot center line L so as to become smaller and smaller in diameter toward the bellows part 3 side. More specifically stated, the shoulder portion 11 is of a short cylinder portion extending from an edge of the groove 13 at the mounting portion 12 towards the bellows part 3 to encircle the outer peripheral face of an opening edge of the housing part 4, and is joined to an outer edge of a sidewall 31 a of the bellows part 3 linking contiguously to the first trough portion 31. This short cylinder portion is thus formed in a taper slanting relative to the boot center line L. The slant angle α of the shoulder portion 11 (hereinafter referred to as "shoulder taper angle") to the boot center line L is preferred to be 6 degrees and upwards, more preferably in a range of 6 to 15 degrees.

Further in this example, the outside diameter of the first crest portion 31 is set to be larger than the outside diameter of the large-diameter cylinder part 1 (outside diameter of a maximum-diameter portion of the large-diameter cylinder part 1).

The joint boot made of resin in this Example as constructed above and a conventional joint boot made of resin shown in Fig. 4 as Comparative Example were subjected to a bending deformation test to investigate the respective folding shapes of the bellows parts 3 when bent and deformed in a wide angle, together with a durability test. Here, both joint boots whose shoulder taper angle α is 8 degrees were used.

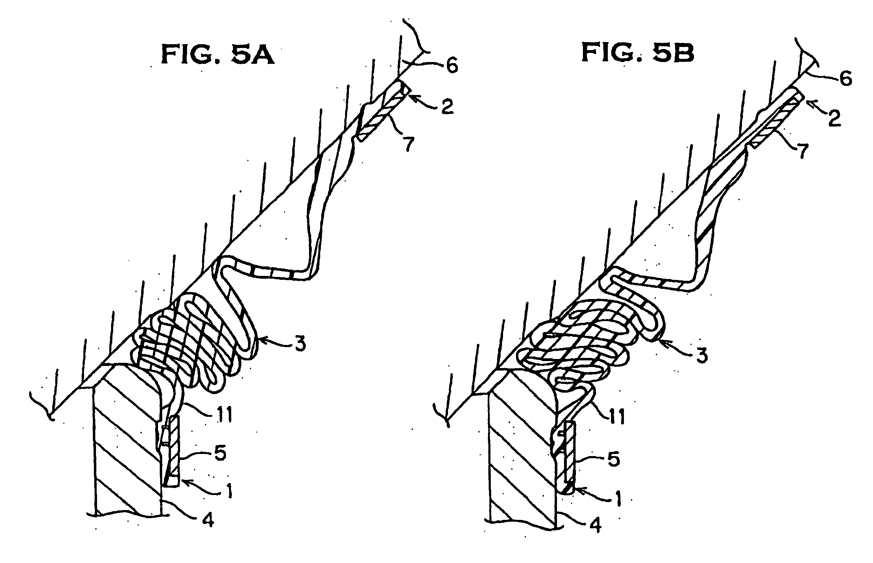

The joint boots in this Example and Comparative Example were mounted on a constant velocity joint as shown in Fig. 2, bent in a joint angle (an angle in which a center line of the housing part 4 and a center line of the shaft 6 make) of 46 degrees, and taken X ray photographs to observe the folding states of the respective bellows parts 3 on their inward bend sides. As a result, with the joint boot in Comparative Example as shown in Fig. 5B, the shoulder portion 11 of the large-diameter cylinder part 1 was deformed, in its inward bend side, to overhang outwardly together with the crest portions of the bellows part 3. In contrast, in the joint boot of this Example as shown in Fig. 5A, the bellows part 3 was folded together in a good condition without the shoulder portion11, in its inward bend side, overhanging outwardly.

Both of the joint boots in Example and Comparative Example thus mounted on the constant velocity joint were further subjected to a durability test under conditions of: an ambient temperature of 100°C, a joint angle of 40 degrees, a revolution number of 400 r.p.m. As a result, in the case of the joint boot in Comparative Example, a crack was produced at the foot portion of the shoulder portion 11 of the large-diameter cylinder part 1 in 10 hours after the start of testing and besides, a piercing crack was caused at the second trough portion of the bellows part 3. With the joint boot in Example, no such crack is produced even after the lapse of 45 hours, and its bending fatigue resistance and wear resistance were significantly enhanced.

A simulation of the joint boots above when deformed in a wide angle was conducted on the deformation configuration and the stress distribution using finite element method (FEM) analysis. In the simulation, as a shoulder taper angle α of the large-diameter cylinder part 1, six values of: 0 degree (the joint boot in Comparative Example above), 5, 6, and 8 degrees (the joint boot in this Example above), and 10 and 15 degrees were chosen, while a joint angle of 46 degrees was chosen in all the cases.

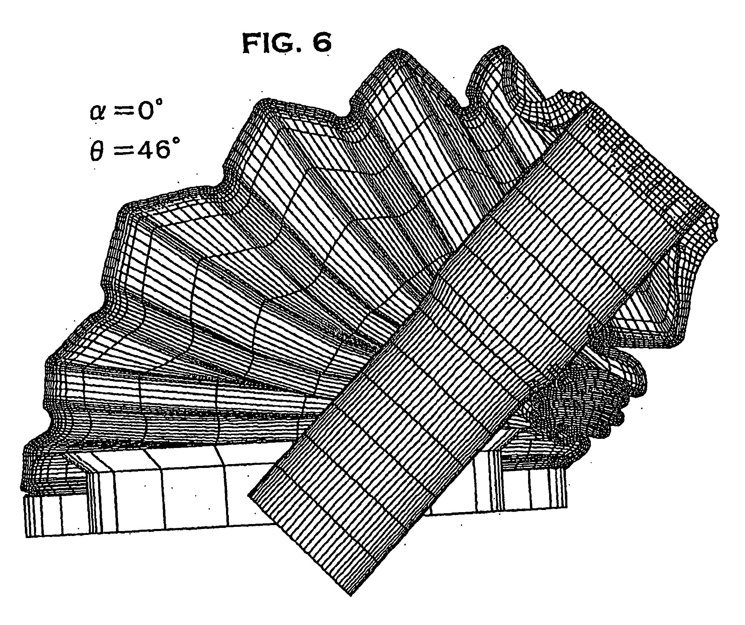

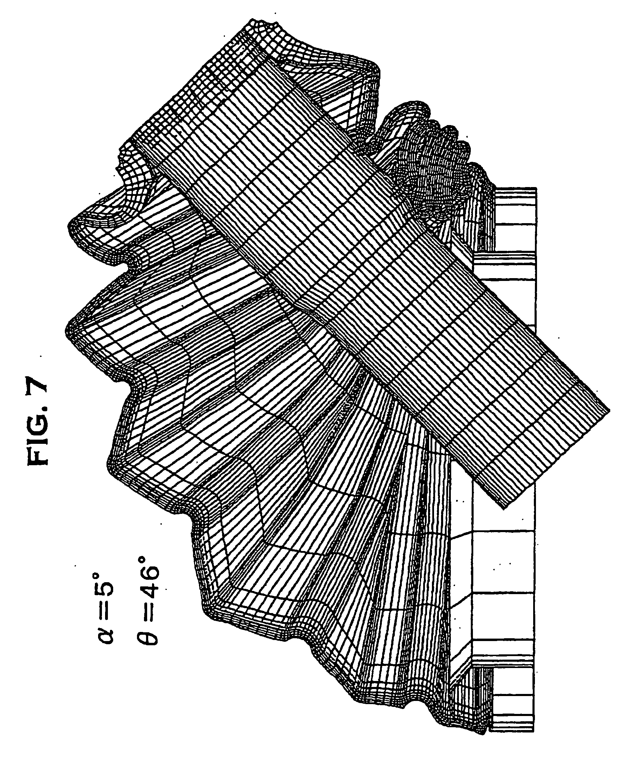

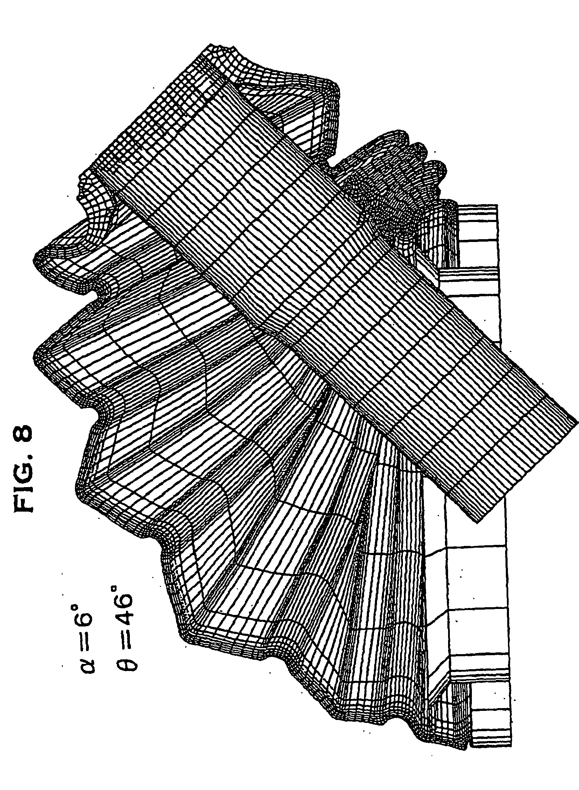

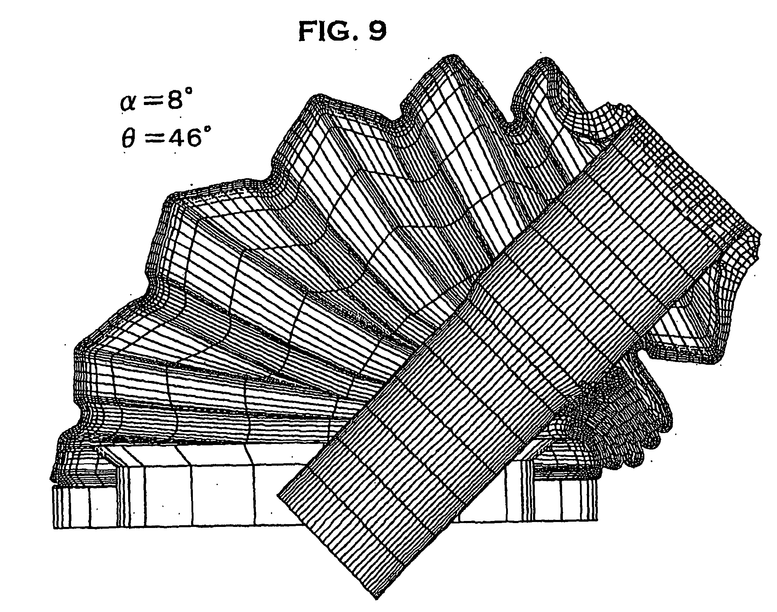

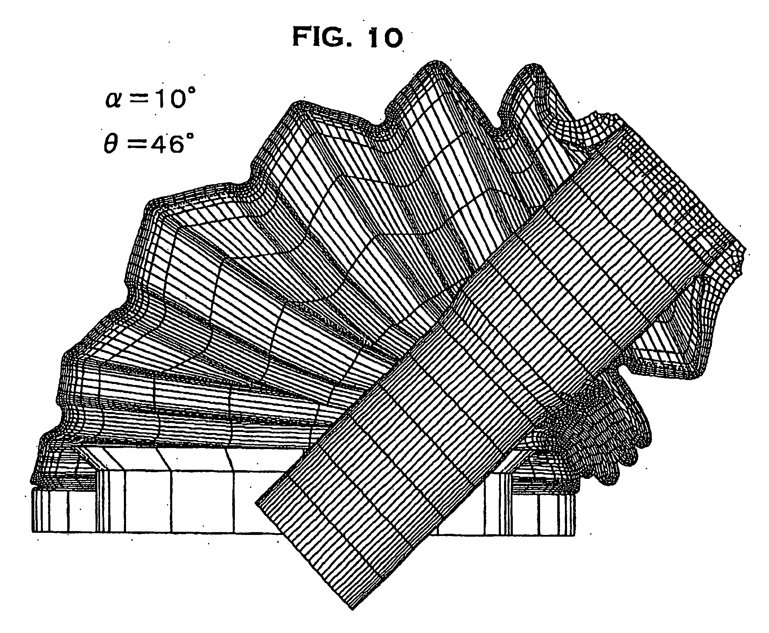

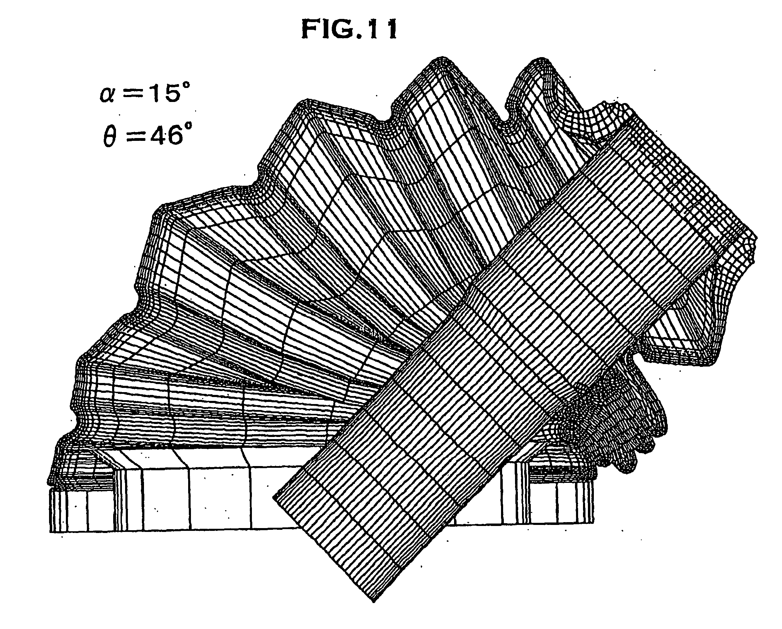

The configurations of those when deformed in a wide angle thus obtained in the simulation by FEM analysis are shown in Figs. 6 to 11. As shown in Fig 6, the simulated configuration with a shoulder taper angle α of 0 degree was similar to the X-ray photo result of the real joint boot, and the simulated shoulder portion 11 of the large-diameter cylinder part 1 overhung outwardly on an inward bend side. This is also true with the case of a shoulder taper angle α of 5 degrees as shown in Fig. 7 wherein the shoulder portion 11 of the large-diameter cylinder part 1 overhung outwardly on the inward bend side. In contrast, in cases where the shoulder taper angles α were 6 degrees or upwards, as shown in Fig. 8 to 11, the shoulder portions 11 did not overhang on the inward sides. In the case of 8 degrees in shoulder taper angle α, a similar simulation result to the X-ray photo result of the real joint boot above was obtained. From these simulation results, it follows that the shoulder taper angle α of the large-diameter cylinder part 1 is preferred to be 6 degrees or upwards in suppressing the outward overhanging deformation of the shoulder portion 11, more preferably 6 to 15 degrees, optimally 8 degrees.

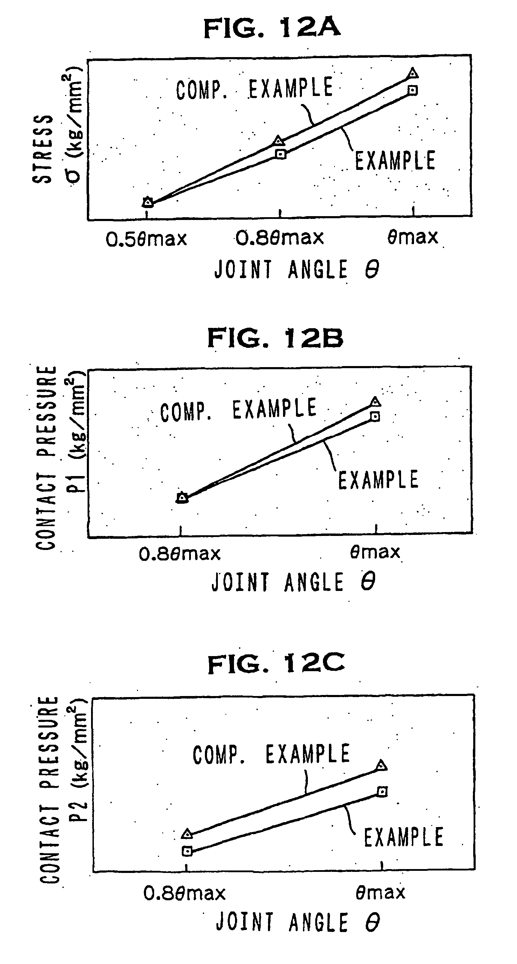

Figs. 12A, 12B, 12C indicate FEM analysis results of stress and contact pressures on the joint boot in the Example above (shoulder taper angle α = 8 degrees) and the joint boot in Comparative Example above (shoulder taper angle α = 0 degree) when deformed in a wide angle.

Fig. 12A is a graphical representation of stress (stresses acting on the trough portions of the bellows part) σ vs. joint angle θ. Here, *θ*ₘₐₓ is a maximum joint angle (46 degrees), 0.5 θₘₐₓ is 0.5 time the maximum joint angle, and 0.8 θₘₐₓ is 0.8 time the maximum joint angle. The result was that the joint boot in Example was reduced by 5% in stress σ at the maximum joint angle θₘₐₓ than that of Comparative Example.

Fig. 12B is a graph of contact pressure of the inter-bellows part (the contact face pressure of the slope extending from the first crest portion 32 to the second trough portion 33 and the slope extending from the second trough portion 33 to the second crest portion 34) P1 vs. joint angle θ. The result was that the joint boot of Example was reduced by 8% in contact pressure P1 of the inter-bellows part at the maximum joint angle θₘₐₓ as compared to that of Comparative Example.

Fig. 12C is a graph of joint angle θ vs. contact pressure P2 of the shaft and the bellows part. As a result, the contact pressure P2 between the shaft and the bellows part at the maximum joint angle θₘₐₓ of the joint boot in Example was reduced by 20% to that of Comparative Example.

From the results described above, it was also confirmed by the simulation that the joint boot of this Example had a superior durability to that of Comparative Example.

As described above, the joint boot made of a resin according to this invention is constructed so that the contour of the shoulder portion of the large-diameter cylinder part is slanted in a taper form toward the small-diameter cylinder part, whereby it is possible to restrain the overhanging deformation of the shoulder portion and to remarkably enhance the durability.

## Claims

1. A combination of a joint boot made of a resin, a fastening clamp (5) and a housing part of a joint, wherein the joint boot comprises
a generally cylindrical large-diameter part (1) at its one end and fitted to an outer peripheral face of said housing part (4);
a cylindrical small-diameter part (2) at its other end, coaxial with the large-diameter part and adapted to be fitted to an outer peripheral face of a shaft (6); and
a bellows part (3) integrally interconnecting both cylindrical parts (1 ,2),
wherein the large-diameter part (1) has a mounting portion (12) with a groove (13) on its outer peripheral face for deceiving the fastening clamp (5), and further has a shoulder portion (11) located axially inwardly of the mounting portion (12), interconnecting the mounting portion (12) and the bellows part (3), joining to and merging with the bellows part (3) and tapering towards the other end of the boot,
wherein the shoulder portion (11) is shaped to encircle the outer peripheral face of the opening edge of the housing part (4) with a space therebetween, when the joint boot is not bent, i.e., the joint angle is 0°;
**characterized in that** the shoulder portion (11) is joined to the outer edge of a sidewall (31a) of the bellows part (3) linking contiguously to the first trough portion (31) of the bellows part (3).

2. The combination of claim 1, wherein the taper angle (α) between the contour of the shoulder portion (11) and the centre line (L) of the boot is at least 6 degrees.

3. The combination of claim 2, wherein the taper angle (α) is from 6 to 15 degrees.

4. The combination of any preceding claim, wherein the bellows part (3) comprises a plurality of mutually contiguous alternating trough and crest portions (31...34), the diameter of the crest portions (32, 34) decreasing progressively from the large-diameter part (1) to the small-diameter part (2), wherein the first crest portion (32) next to the large-diameter part (1) has a larger outer diameter than the large-diameter cylindrical part (1).

## Patentansprüche

1. Kombination aus einer aus Kunstharz hergestellten Gelenkmanschette, einer Befestigungsklemme (5) und einem Gehäuseteil eines Gelenks, wobei die Gelenkmanschette umfaßt:
an ihrem einen Ende ein im wesentlichen zylindrisches Teil (1) großen Durchmessers, das an eine äußere Umfangsfläche des Gehäuseteils (4) angefügt ist;
an ihrem anderen Ende ein zylindrisches Teil (2) kleinen Durchmessers, das koaxial mit dem Teil großen Durchmessers ist und dazu ausgelegt ist, an eine äußere Umfangsfläche eines Schafts (6) angefügt zu sein; und
einen einstückig die beiden zylindrischen Teile (1, 2) verbindenden Faltenbalgteil (3),
wobei der Teil (1) großen Durchmessers einen Befestigungsabschnitt (12) mit einer Nut (13) auf seiner Außenumfangsfläche zum Aufnehmen der Befestigungsklemme (5) hat und ferner einen vom Befestigungsabschnitt axial nach innen angeordneten Schulterabschnitt (11) hat, der den Befestigungsabschnitt (12) und den Faltenbalgteil (3) miteinander verbindet, zum Faltenbalgteil (3) hin verläuft, in diesen übergeht und sich zum anderen Ende der Manschette hin verjüngt,
wobei der Schulterabschnitt (11) so geformt ist, daß er die äußere Umfangsfläche der Öffnungskante des Gehäuseteils (4) mit einem Zwischenraum umgibt, wenn die Gelenkmanschette nicht gebogen ist, d.h., der Gelenkwinkel 0° ist;
**gekennzeichnet dadurch, dass** der Schulterabschnitt (11) mit dem äußeren Rand einer Seitenwand (31a) des Faltenbalgteils (3) verbunden ist, der fortlaufend an den ersten Muldenabschnitt (31) des Faltenbalgteils (3) anschließt.

2. Kombination nach Anspruch 1, wobei der Verjüngungswinkel (α) zwischen dem Umriß des Schulterabschnitts (11) und der Mittellinie (L) der Manschette mindestens 6° beträgt.

3. Kombination nach Anspruch 2, wobei der Verjüngungswinkel (α) zwischen 6° und 15° beträgt.

4. Kombination nach einem der vorhergehenden Ansprüche, wobei der Faltenbalgteil (3) mehrere wechselweise benachbarte alternierende Tal- und Kammabschnitte (31...34) umfaßt, wobei der Durchmesser der Kammabschnitte (32, 34) vom Teil (1) großen Durchmessers aus zum Teil (2) kleinen Durchmessers hin progressiv abnimmt, wobei der erste Kammabschnitt (32) neben dem Teil (1) großen Durchmessers einen größeren äußeren Durchmesser als das zylindrische Teil (1) großen Durchmessers hat.

## Revendications

1. Combinaison d'un soufflet de joint en résine, d'une pince de serrage et d'une partie formant logement d'un joint, le soufflet de joint comprenant
une partie globalement cylindrique (1) de grand diamètre à une de ses extrémités, et montée sur une face périphérique extérieure de ladite partie formant logement (4) ;
une partie cylindrique (2) de petit diamètre à son autre extrémité, coaxiale à la partie de grand diamètre et conçue pour être installée sur une face périphérique extérieure d'un arbre (6) ; et
une partie formant soufflet (3) reliant solidairement l'une à l'autre les deux parties cylindriques (1, 2),
la partie de grand diamètre (1) ayant une partie de montage (12) avec une gorge (13) sur sa face périphérique interne pour recouvrir la pince de serrage (5), et ayant en outre une partie formant épaulement (11) située axialement à l'intérieur de la partie de montage (12), interconnectant la partie de montage (12) et la partie formant soufflet, et se fondant dans la partie formant soufflet (3) et présentant une conicité vers l'autre extrémité du soufflet,
la partie formant épaulement (11) ayant une forme permettant d'entourer la face périphérique extérieure du bord de l'ouverture de la partie formant logement (4) avec un espace entre ceux-ci, lorsque le soufflet de joint n'est pas courbé, i.e. l'angle de joint est O°;
**caractérisé en ce que** la partie formant épaulement (11) est reliée au bord extérieur d'une paroi latérale (31 a) de la partie formant soufflet (3) en liaison continue avec la première partie traversante (31) de la partie formant soufflet (3).

2. Combinaison selon la revendication 1, dans laquelle l'angle de conicité (α) entre le profil de la partie formant épaulement (11) et l'axe géométrique central (L) du soufflet est d'au moins 6 degrés.

3. Combinaison selon la revendication 2, dans laquelle l'angle de conicité (α) est de 6 à 15 degrés.

4. Combinaison selon l'une quelconque des revendications précédentes, dans laquelle la partie formant soufflet (3) comporte une pluralité de parties de creux et de crêtes (31...34) mutuellement contigus et alternants, le diamètre des parties de crêtes (32, 34) diminuant progressivement depuis la partie de grand diamètre (1) vers la partie de petit diamètre (2), la première partie de crête (32) à proximité de la partie de grand diamètre (1) ayant un diamètre extérieur plus grand que celui de la partie cylindrique (1) de grand diamètre.
